# FASCICULE DE BREVET EUROPEEN

(11) **EP 3 463 984 B1**
(45) Date de publication et mention de la délivrance du brevet: **22.01.2020**
(21) Numéro de dépôt: 17727648.2
(22) Date de dépôt: 11.05.2017
(51) Int. Cl.: B60R 13/02, B60R 21/213, B60R 21/216

(54) **ENSEMBLE DE RETENUE POUR UN ÉLÉMENT DE GARNITURE D'UN VÉHICULE**
HALTEANORDNUNG FÜR EIN FAHRZEUGVERKLEIDUNGSTEIL
RESTRAINT ASSMEBLY FOR A TRIM ELEMENT OF A VEHICLE

(30) Priorité: 26.05.2016 FR 1654742
(43) Date de publication de la demande: 10.04.2019
(73) Titulaire: NOVARES France, 92140 Clamart (FR)
(72) Inventeur: DUBUISSON, Eric, 06190 Roquebrune Cap Martin (FR); REBILLON, Sébastien, 06000 Nice (FR)
(74) Mandataire: Delorme, Nicolas
(86) Numéro de dépôt international: PCT/FR2017/051122
(87) Numéro de publication internationale: WO 2017/203121

(56) Documents cités:
- EP-A1- 0 873 916
- DE-A1- 10 001 444
- DE-A1-102009 049 361
- JP-A- 2004 161 141

## Description

La présente invention concerne un élément de garniture comprenant un ensemble de retenue pour la retenue dudit élément de garniture à un élément de carrosserie d'un véhicule lors du déploiement d'un coussin gonflable de sécurité interposé entre l'élément de garniture et l'élément de carrosserie. L'invention concerne également un véhicule équipé de cet élément de garniture et un élément de carrosserie.

Un coussin gonflable de sécurité, ou airbag, est une enveloppe communément appelée vessie, au sein de laquelle est injecté un gaz généré par une réaction chimique explosive, qui se développe très rapidement en la gonflant. Les coussins gonflables de sécurité sont en particulier utilisés dans le domaine automobile pour protéger les occupants d'un véhicule lors d'une collision.

Dans le cas d'un coussin gonflable de sécurité, le coussin dans sa position repliée est interposé entre un élément de carrosserie du véhicule formant un côté de caisse et un élément de garniture du véhicule, monté sur cet élément de carrosserie, et qui masque le coussin. Lors de la détection d'une collision, le coussin se gonfle par injection de gaz au sein de celui-ci. Le coussin se déploie et écarte l'élément de garniture. Ceci génère parfois la déformation de l'élément de garniture qui se détache de l'élément de carrosserie dans l'habitacle. Afin que l'élément de garniture ne constitue pas un projectile pouvant blesser l'un des occupants du véhicule, il est nécessaire de retenir l'élément de garniture à l'élément de carrosserie tout en permettant le déploiement du coussin gonflable.

A cet effet, il est connu d'utiliser un ensemble pour la retenue d'un élément de garniture à un élément de carrosserie entre lesquels le coussin gonflable est intercalé. Cet ensemble comprend typiquement un porte-agrafe monté sur un élément de garniture et une agrafe encliquetée sur le porte-agrafe et sur l'élément de carrosserie. Cette agrafe spécifique diffère des agrafes conventionnelles utilisées pour un simple montage de l'élément de garniture sur l'élément de carrosserie. Cette agrafe spécifique à la présence du coussin gonflable est fréquemment configurée pour un partiel désencliquetage de l'élément de carrosserie, de sorte à permettre un déplacement contrôlé de l'élément de garniture. Cette agrafe spécifique peut présenter deux sites d'encliquetage avec l'élément de carrosserie. Ces deux sites sont volumineux de sorte que l'utilisation de l'agrafe spécifique peut être impossible selon la forme de l'élément de garniture. De plus, l'encombrement généré par ce volume entre l'élément de garniture et l'élément de carrosserie réduit l'espace intercalaire, au point de rendre celui-ci insuffisant pour le déploiement du coussin gonflable dans de bonnes conditions. Qui plus est, toutes les agrafes spécifiques disponibles sur le marché sont nettement plus coûteuses que les agrafes conventionnelles. Le document EP0873916 montre un élément de garniture selon le préambule de la revendication 1.

Un des buts de la présente invention est de pallier au moins l'un de ces inconvénients. A cet effet, l'invention propose un ensemble de retenue pour la retenue d'un élément de garniture à un élément de carrosserie d'un véhicule entre lesquels est destiné à être interposé un coussin gonflable de sécurité, l'ensemble de retenue comprenant :
- un porte-agrafe venu intégralement de matière avec l'élément de garniture, comprenant :
   - une partie proximale liée à l'élément de garniture, et
   - une partie distale sur laquelle est montée une agrafe conformée pour une fixation à l'élément de carrosserie,
      la partie proximale et la partie distale étant solidarisées par l'intermédiaire d'une région sécable configurée pour se rompre lors du déploiement du coussin gonflable de sécurité, et
      la partie distale étant déplaçable entre une position de repos dans laquelle la région sécable solidarise la partie distale et la partie proximale et une position de déploiement dans laquelle la partie distale est désolidarisée de la partie proximale par rupture de la région sécable, et
- un élément de retenue configuré pour retenir la partie distale à l'élément de garniture lorsque la partie distale est en position de déploiement.

Ainsi, dans la configuration de cet ensemble de retenue, lorsqu'un choc est détecté dans le véhicule et que le déploiement du coussin gonflable est activé, la partie distale est détachée de la partie proximale et se déplace de sa position de repos à sa position de déploiement, en étant retenue dans sa course par l'élément de retenue. Ce déplacement permet l'éloignement de l'élément de garniture par rapport à l'élément de carrosserie pour faciliter le déploiement du coussin. L'ensemble de retenue permet ainsi d'éviter la projection de l'élément de garniture malgré la vitesse d'ouverture du coussin (de l'ordre de 300km/h) et l'importance des forces associées. Ainsi, le porte-agrafe déployable rend l'utilisation d'une agrafe standard possible tout en formant un ensemble de retenue peu volumineux, permettant le déploiement du coussin gonflable sans entrave.

Selon une disposition, l'élément de retenue est disposé à l'intérieur du volume délimité par le porte-agrafe avec la partie distale en position de repos, de sorte à limiter son encombrement.

Selon une autre disposition, l'élément de retenue est disposé à l'extérieur du volume délimité par le porte-agrafe en position de repos de la partie distale de sorte à faciliter son montage. De plus, lorsque l'élément de retenue est souple, l'encombrement susceptible d'être généré par ce positionnement est peu important.

Selon l'invention, l'élément de retenue est venu de matière avec l'élément de garniture, ce qui simplifie le procédé de fabrication et limite le nombre d'étapes.

Avantageusement, la région sécable comprend une zone de matériau ruptible configurée pour se rompre lors du déploiement du coussin gonflable et pour désolidariser la partie distale de la partie proximale. La région sécable est simple à fabriquer et le fonctionnement de l'ensemble de retenue est fiable.

De préférence, la partie distale comprend une paroi de montage munie d'un orifice de montage et configurée pour coopérer avec un organe de montage complémentaire prévu sur l'agrafe pour le montage de l'agrafe sur la partie distale. Lorsque l'agrafe utilisée est standard, l'organe de montage complémentaire est un élément d'encliquetage qui coopère simplement avec l'orifice de montage.

Avantageusement, l'ensemble de retenue comprend une portion de soutien présentant globalement une forme de U, disposée en regard de l'organe de montage complémentaire de l'agrafe montée sur la paroi de montage, la portion de soutien étant configurée pour soutenir l'organe de montage de l'agrafe lorsqu'elle est fixée sur l'élément de carrosserie. Cette configuration permet en effet à l'agrafe, d'être maintenue dans l'orifice de montage lors de son encliquetage en force dans l'élément de carrosserie, ce qui participe à la bonne fixation de l'élément de garniture à l'élément de carrosserie.

De préférence, l'ensemble de retenue comprend des ponts de matière ruptibles reliant l'élément de retenue à la partie distale en position de repos, ces ponts de matière étant configurés pour se rompre lorsque la partie distale est déplacée en position de déploiement. Ces ponts de matière renforcent la stabilité de l'ensemble en position de repos et participe à diminuer les risques de rupture de la région sécable lors de la fixation de l'agrafe à l'élément de carrosserie.

Selon une disposition, la partie distale comprend un organe de butée configuré pour venir en appui contre un organe de butée complémentaire prévu sur l'élément de retenue lorsque la partie distale est en position de déploiement. Cette configuration permet d'offrir une résistance mécanique destinée à s'opposer efficacement à la course de la partie distale et la stopper lors du déploiement du coussin gonflable. Ainsi, la projection de l'élément de garniture dans l'habitacle est évitée sans pour autant nuire au déploiement du coussin gonflable.

Selon une possibilité la partie distale comprend deux parois latérales se faisant face, rattachées à deux cotés périphériques opposés de la paroi de montage et la portion de soutien est reliée aux deux parois latérales par une portion de retour. Cette configuration participe à la résistance de cette pièce pouvant être soumise à des sollicitations extrêmes. Cette portion de retour est avantageusement configurée pour apporter une flexibilité à la portion de soutien lors de la fixation de l'agrafe sur l'élément de carrosserie et éviter la rupture de la région sécable.

Selon une autre variante, la portion de soutien est reliée à la partie proximale par une portion de retour, de sorte à assurer une bonne résistance mécanique à l'ensemble de retenue lors de la fixation de l'agrafe.

Avantageusement, la partie distale comprend une paroi inférieure reliée à la paroi de montage par les deux parois latérales, et la partie proximale comprend au moins un plot d'appui disposé en regard de la paroi inférieure, l'au moins un plot d'appui étant configuré pour permettre une prise d'appui de la paroi inférieure lorsque l'agrafe est fixée sur l'élément de carrosserie. Cette configuration participe à absorber les forces générées sur le porte-agrafe lors de la fixation de l'agrafe à l'élément de carrosserie, de sorte que la région sécable est préservée. Bien entendu, la partie proximale peut comprendre deux plots d'appui, et plus encore, pour augmenter la stabilité de l'ensemble de retenue en position de repos de la partie distale.

De préférence, la partie distale comprend une paroi de fond reliant les deux parois latérales, et l'ensemble de retenue comprend en outre une face de fond s'étendant sensiblement parallèlement à la paroi de fond, la face de fond comprenant une nervure de guidage configurée pour guider le déplacement de la paroi de fond de la partie distale depuis sa position de repos vers sa position de déploiement.

Selon une variante de réalisation, l'élément de retenue comprend un organe élastique configuré pour prendre une position comprimée lorsque la partie distale est en position de repos, et une position détendue, lorsque la partie distale est en position de déploiement, dans laquelle la longueur de l'organe élastique est plus importante que la longueur de l'organe élastique en position comprimée.

Avantageusement, l'organe élastique est disposé dans le volume intérieur délimité par le porte-agrafe lorsque que la région sécable n'est pas rompue.

Afin de renforcer la résistance mécanique de l'ensemble de retenue, l'organe élastique comprend au moins un point de rattachement à la partie proximale et au moins un point de rattachement à la partie distale.

Selon encore une autre variante de réalisation, l'élément de retenue comprend un cordon souple dont une première région d'extrémité du cordon est reliée à la partie distale et une deuxième région d'extrémité est reliée à la partie proximale du porte-agrafe, le cordon étant configuré pour prendre une position détendue lorsque la partie distale est en position de repos, dans laquelle le cordon est détendu, et une position tendue lorsque la partie distale est en position de déploiement, dans laquelle le cordon est étendu. En position tendue, le cordon est ainsi un élément de retenue efficace de la partie proximale et de l'élément de garniture.

Selon une possibilité, le cordon souple est disposé dans le volume intérieur délimité par le porte-agrafe en position de repos de la partie distale, ce qui limite avantageusement l'encombrement au sein de l'élément de garniture.

Selon une variante de réalisation, le cordon souple est disposé en périphérie extérieure du porte-agrafe lorsque la partie distale est en position de repos, de sorte que le montage est simplifié et les coûts de fabrication sont diminués.

Selon une disposition, le cordon souple comprend des fibres de polyester.

Selon un deuxième aspect, l'invention concerne également un véhicule comprenant :
- un élément de carrosserie, et
- un élément de garniture tel que précédemment décrit.

Avantageusement, l'élément de garniture et le porte-agrafe sont monoblocs et comprennent un matériau plastique tel que du polypropylène. Ce mode de réalisation permet une fabrication rapide sans rajouter d'étape de procédé à la fabrication de l'ébénisterie, dans un matériau bien connu dans le domaine de l'équipement automobile, qui est léger et économique.

D'autres aspects, buts et avantages de la présente invention apparaîtront mieux à la lecture de la description suivante de différents modes de réalisation de celle-ci, donnée à titre d'exemples non limitatifs et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.

Les figures 1 et 2 illustrent une vue en section d'un ensemble de retenue selon un mode de réalisation n'étant pas conforme à la présente invention, respectivement en position de repos et en position de déploiement.

La figure 3 illustre une vue partielle en perspective de l'ensemble de retenue illustré en figure 2 en position de déploiement.

Les figures 4 et 5 illustrent une vue partielle en perspective d'un ensemble de retenue selon un deuxième mode de réalisation de l'invention en position respectivement de repos et de déploiement.

Les figures 6 et 7 illustrent une vue partielle en perspective d'un ensemble de retenue selon un troisième mode de réalisation de la présente invention, respectivement en position de repos et en position de déploiement

Les figures 8 et 9 illustrent une vue partielle en perspective d'un ensemble de retenue selon un quatrième mode de réalisation de la présente invention, respectivement en position de repos et en position de déploiement.

La figure 10 illustre une vue partielle en perspective de l'ensemble de retenue illustré en figure 9 en position de déploiement, selon une variante de réalisation de l'invention.

La figure 11 illustre une vue schématique en perspective d'un ensemble de retenue selon une variante de réalisation de la présente invention.

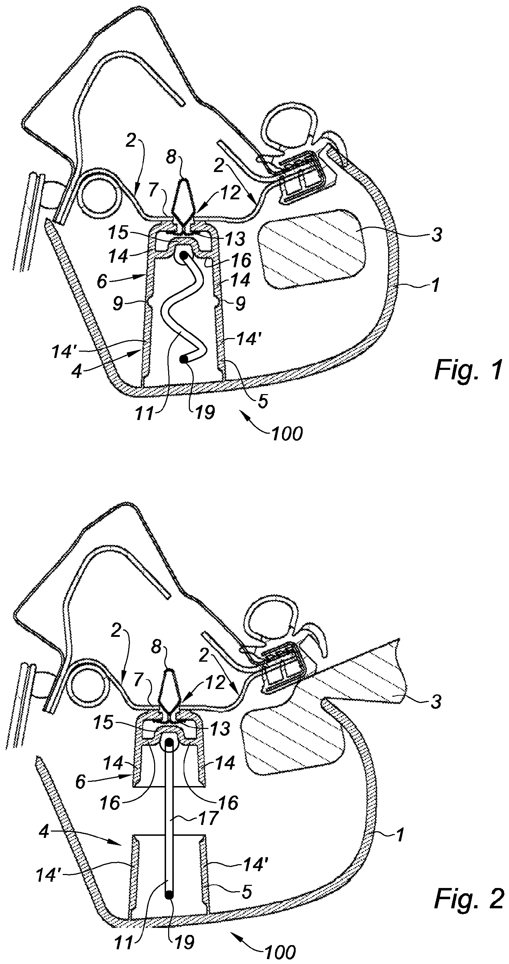

La figure 1 illustre un ensemble de retenue 100 disposé dans un véhicule pour la retenue d'un élément de garniture 1 à un élément de carrosserie 2 lors du déploiement d'un coussin 3 gonflable de sécurité, interposé entre l'élément de garniture 1 et l'élément de carrosserie 2. L'ensemble de retenue 100 comprend un porte-agrafe 4 composé d'une partie proximale 5, directement liée à l'élément de garniture 1, et une partie distale 6 comprenant une paroi de montage 7 sur laquelle est montée une agrafe 8 pour une fixation à un élément de carrosserie 2 du véhicule, reliant ainsi la partie distale 6 à l'élément de carrosserie 2. La partie distale 6 est configurée pour se déplacer entre une position de repos (figure 1), dans laquelle elle est solidarisée à la partie proximale 5 par une région sécable 9, et une position de déploiement (figure 2) dans laquelle la partie distale 6 est désolidarisée de la partie proximale 5 par rupture de la région sécable 9. Cette région sécable 9 comprend en effet une zone de matériau ruptible, configurée pour se rompre lors du déploiement du coussin 3 gonflable et permettre le déplacement de la partie distale 6 dans sa position de déploiement.

Le porte-agrafe 4 comprend également un élément de retenue 11 configuré pour retenir la partie distale 6 à l'élément de garniture 1 lorsque la partie distale 6 est en position de déploiement.

La paroi de montage 7 de la partie distale 6 est munie d'un orifice de montage 12 à travers lequel est monté un organe de montage complémentaire 13 tel qu'un organe d'encliquetage, prévu sur l'agrafe 8. Selon une disposition non illustrée, d'autres moyens adaptés pour le montage de l'agrafe 8 sur la paroi de montage 7 peuvent être utilisés.

La partie distale 6 comprend deux parois latérales 14 s'étendant en face à face en rejoignant les deux cotés périphériques et opposés de la paroi de montage 7. La partie proximale 5 comprend deux parois latérales inférieures 14' distinctes, chacune rejoignant une paroi latérale 14 respective de la partie distale 6 par l'intermédiaire de la région sécable 9. Dans le mode de réalisation illustré sur les figures 1 et 2, la paroi latérale 14 de la partie distale 6 s'étend sensiblement dans le prolongement de la paroi latérale inférieure 14' respective de la partie proximale 5.

Egalement illustré à la figure 1, le porte-agrafe 4 comprend une portion de soutien 15 présentant globalement une forme de U (en position inversée vis-à-vis de l'agrafe 8) disposée en regard de l'organe de montage complémentaire 13 de l'agrafe 8, lorsque celle-ci est montée sur la paroi de montage 7, de sorte à soutenir l'organe de montage complémentaire 13 lors de la fixation de l'agrafe 8 à l'élément de carrosserie 2. Selon la configuration illustrée sur la figure 1, la portion de soutien 15 est reliée aux deux parois latérales 14 de la partie distale 6 par une portion de retour 16. Cette configuration permet de maintenir l'agrafe 8 en place dans la paroi de montage 7 du porte-agrafe 4 pendant sa fixation à l'élément de carrosserie 2, tout en préservant la région sécable 9 grâce à la flexibilité élastique apportée au niveau de la portion de retour 16.

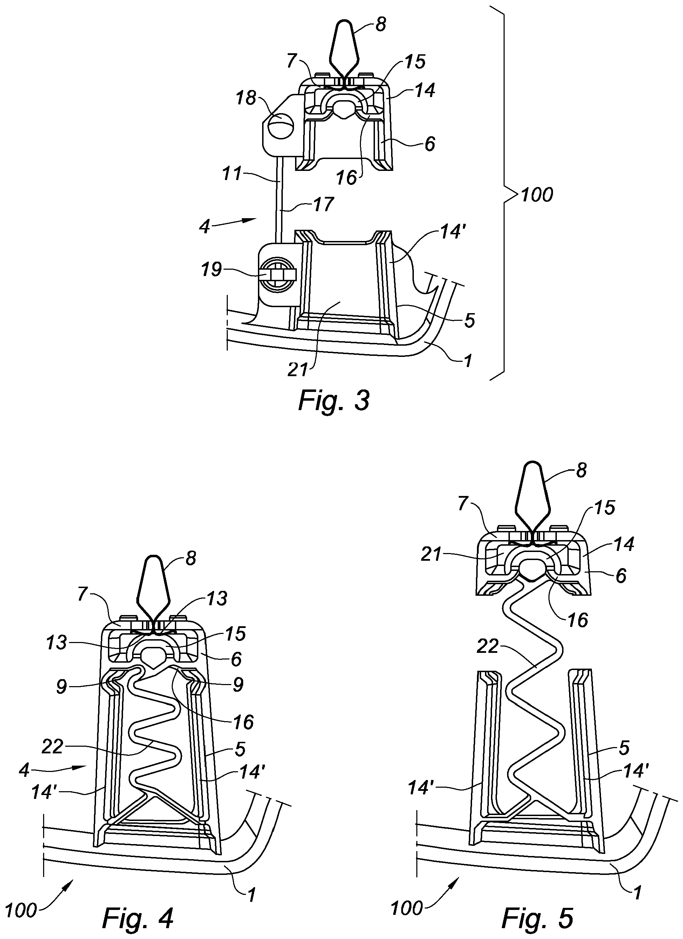

Comme illustré sur les figures 1 et 2, l'élément de retenue 11 comprend un cordon 17 souple disposé dans le volume intérieur délimité par le porte-agrafe 4 en position de repos de la partie distale 6. Une première région d'extrémité du cordon 17 est reliée à la partie distale 6 et une deuxième région d'extrémité est reliée à la partie proximale 5 du porte-agrafe 4, le cordon 17 étant configuré pour prendre une position détendue lorsque la partie distale 6 est en position de repos, dans laquelle le cordon 17 est détendu (figure 1). Lorsque le coussin 3 gonflable est déployé, la région sécable est rompue, la partie distale 6 est en position de déploiement, et le cordon 17 est en position tendu c'est-à-dire qu'il est étendu de sorte à retenir la partie distale 6 de l'élément de garniture 1 (figure 2). La première région d'extrémité du cordon 17 comprend une sphère 18 (visible sur la figure 3) dont le diamètre est supérieur à celui d'un orifice formé dans la partie distale 6 et destiné au passage du cordon 17, de sorte à maintenir la sphère 18 accrochée à la partie distale 6. La deuxième région d'extrémité comprend un élément d'encliquetage 19 (également visible sur la figure 3) configuré pour coopérer et être retenu par un orifice formé dans la partie proximale 5. Cette configuration permet de faciliter le montage et démontage du cordon 17 au porte-agrafe 4.

Selon une variante de réalisation illustrée à la figure 3, l'élément de retenue 11 est un cordon 17 reliant la partie distale 6 à la partie proximale 5 tout en étant disposé à l'extérieur du volume délimité par le porte-agrafe 4 en position de repos de la partie distale 6.

Selon une possibilité, notamment illustrée à la figure 3, la partie distale 6 et/ou la partie proximale 5 comprennent une paroi de fond 21 venue intégralement de matière avec le porte-agrafe 4, permettant de renforcer sa rigidité mécanique.

Les figures 4 et 5 illustrent un deuxième mode de réalisation de l'invention qui diffère du précédent notamment en ce que l'élément de retenue 11 comprend un organe élastique 22 configuré pour prendre une position comprimée lorsque la partie distale 6 est en position de repos, et une position détendue, lorsque la partie distale 6 est en position de déploiement, dans laquelle la longueur de l'organe élastique 22 est plus importante que la longueur de l'organe élastique 22 en position comprimée. Comme il est visible sur les figures 4 et 5, les deux régions d'extrémité opposées de l'organe élastique 22 se divisent en deux parties pour former deux points distincts de rattachement respectivement à la partie proximale 5 et à la partie distale 6. Cette configuration permet de garantir la tenue mécanique de l'élément de retenue 11 lors du déploiement du coussin 3 gonflable. Selon une disposition non illustrée, l'organe élastique 22 ne comprend qu'un seul point de rattachement respectivement à la partie proximale 5 et à la partie distale 6.

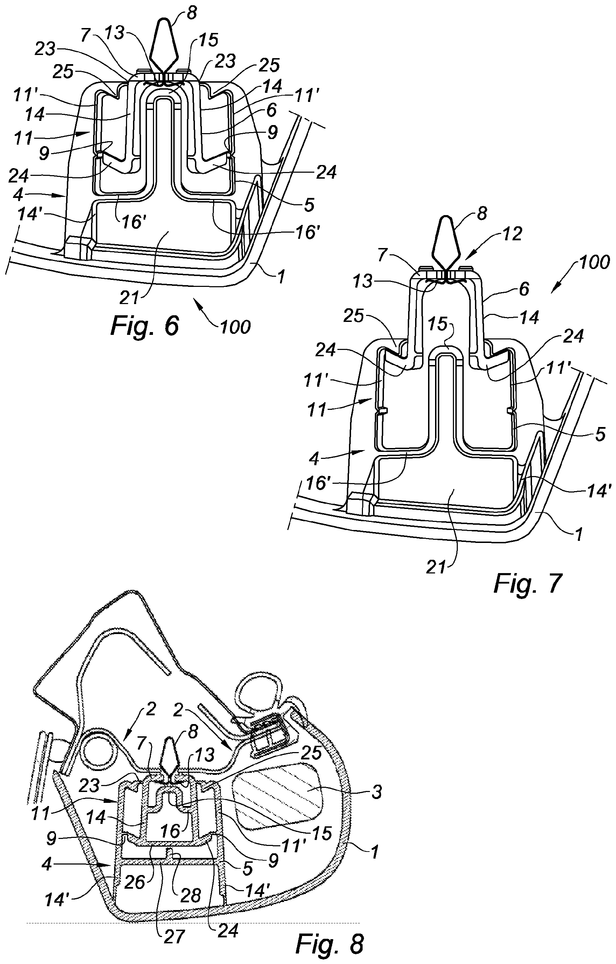

Les figures 6 et 7 illustrent un troisième mode de réalisation de l'invention dans lequel la portion de soutien 15, disposée en regard de l'organe de montage complémentaire 13 de l'agrafe 8, est rattachée par l'intermédiaire d'une portion de retour 16' aux deux parois latérales inférieures 14' de la partie proximale 5. De plu, la partie distale 6 en position de repos est liée à l'élément de retenue 11 par l'intermédiaire de ponts de matière 23 ruptibles formant une liaison avec chacune des parois latérales 14, et configurés pour se rompre lors du déploiement du coussin 3 et permettre le déplacement de la partie distale 6 de sa position de repos à sa position de déploiement. La partie distale 6 comprend également un organe de butée 24 formé dans le prolongement inférieur de chacune des parois latérales 14. Chaque organe de butée 24 comprend une portion terminale reliée à une paroi verticale 14' respective de la partie proximale 5 par une région sécable 9. Ces organes de butée 24 sont conformés pour venir en butée contre des organes de butée complémentaires 25 formés sur l'élément de retenue 11 et retenir la partie distale 6 en position de déploiement. Plus précisément, l'élément de retenue 11 comprend au moins deux parties de retenue 11' distinctes, chacune des deux parties de retenue 11' s'étendant dans le prolongement de l'une des deux parois latérales inférieures 14' de la partie proximale 5. Les parties de retenue 11' comprennent chacune un organe de butée complémentaire 25 formé par une région d'extrémité présentant un élément en retour.

La figure 7 illustre l'ensemble de retenue 100 de la figure 6 lorsque la partie distale 6 est en position de déploiement : la partie distale 6 est désolidarisée de la partie proximale 5 par rupture de la région sécable 9, et des parties de retenue 11' par rupture des ponts de matière 23. L'organe de butée 24 est en appui contre l'organe de butée complémentaire 25 de l'élément de retenue 11 ce qui permet de retenir l'élément de garniture 1 à l'élément de carrosserie 2.

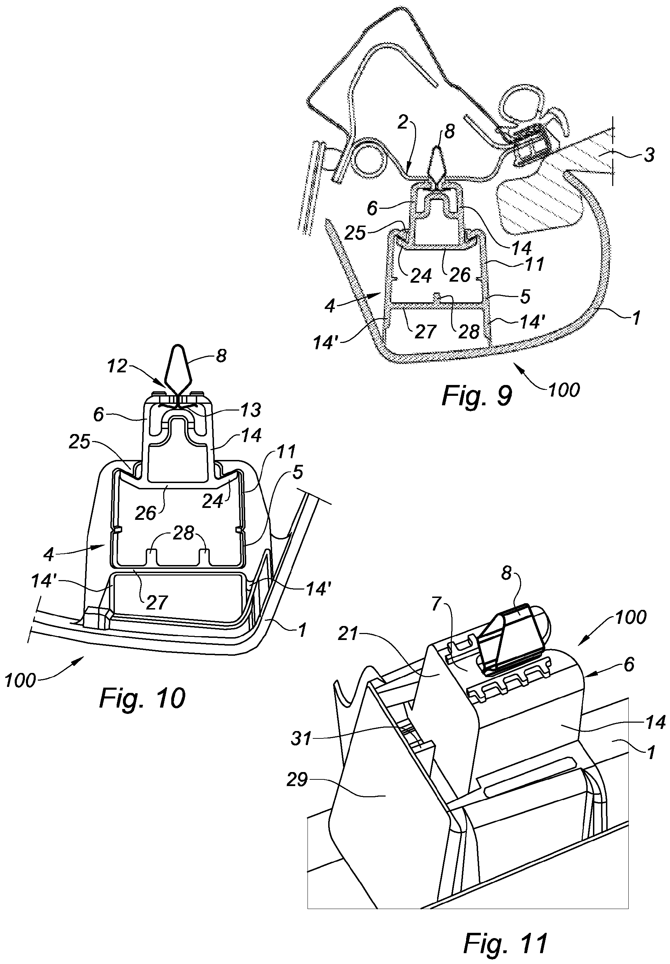

Les figures 8 et 9 illustrent un mode de réalisation qui diffère du précédent notamment par le fait que la portion de soutien 15 est rattachée aux parois latérales 14 de la partie distale 6 par une portion de retour 16. La partie distale 6 comprend en outre une paroi inférieure 26, s'étendant sensiblement parallèlement à la paroi de montage 7 et reliée à cette dernière par l'intermédiaire des deux parois latérales 14. Cette paroi inférieure 26 est prolongée de part et d'autre des deux parois latérales 14 par l'organe de butée 24.

Dans ce mode de réalisation, la partie proximale 5 comprend par ailleurs une portion d'appui 27 s'étendant entre les parois latérales inférieures 14' et configurée pour être disposée en regard de la paroi inférieure 26 de la partie distale 6. Cette portion d'appui 27 comprend un plot d'appui 28 configuré pour que la paroi inférieure 26 y prenne appui lors de la fixation de l'agrafe 8 à l'élément de carrosserie 2.

Comme illustré à la figure 9, la région sécable 9 et les ponts de matière 23 sont rompus lorsque le coussin 3 gonflable est déployé. La partie distale 4 est désolidarisée de la partie proximale 5 et se déplace de sa position de repos vers sa position de déploiement, sous l'effet des contraintes engendrées par le déploiement du coussin 3. Ce déplacement de la position de repos à la position de déploiement autorise l'écartement de l'élément de garniture 1 vis-à-vis de l'élément de carrosserie 2 et permet le déploiement total du coussin 3 gonflable. La partie distale 4 est retenue en position de déploiement par coopération des organes de butée 24 avec ceux de l'élément de retenue 11, de sorte que l'élément de garniture 1 est juste déplacé, sans être projeté dans l'habitacle lors du déploiement du coussin 3.

La figure 10 illustre une variante de réalisation qui diffère de la précédente notamment par le fait que la portion d'appui 27 de la partie proximale 5 comprend deux plots d'appui 28, configurés pour garantir l'équilibre de la partie distale 6 pouvant prendre appui sur les plots d'appui 28 lors de la fixation de l'agrafe 8. Cette configuration permet de limiter les tensions pouvant s'appliquer sur la région sécable 9 en vue de la préserver. Selon d'autres variantes non illustrées, la partie proximale 5 comprend un autre nombre de plots d'appui 28 également configurés pour garantir l'appui de la paroi inférieure 26 et préserver la région sécable 9.

Selon une variante de réalisation illustrée à la figure 11, la partie distale 6 comprend une paroi de fond 21 reliant les deux parois latérales 14. L'ensemble de retenue 100 comprend une face de fond 29 s'étendant sensiblement parallèlement à la paroi de fond 21. Une nervure de guidage 31 prévue sur la face de fond 29 est configurée pour coopérer avec la paroi de fond 21 et guider le déplacement de la partie distale 6 depuis sa position de repos vers sa position de déploiement.

Ainsi, la présente invention apporte une amélioration déterminante à l'état de la technique antérieure en proposant un ensemble de retenue 100 comprenant un porte-agrafe 4 configuré pour pouvoir se déployer tout en permettant à un élément de garniture 1 associé de rester retenu à l'élément de carrosserie 2, qui est simple à produire et économique. Il permet d'utiliser des agrafes standard peu couteuses et il est bien entendu également adapté à l'utilisation d'agrafes spécifiques conçues pour se déployer dans les cas nécessitant d'augmenter la course de la garniture lors du déploiement du coussin 3 gonflable.

Il va de soi que l'invention n'est pas limitée aux modes de réalisation décrits ci-dessus à titre d'exemples mais qu'elle comprend tous les équivalents techniques et les variantes des moyens décrits ainsi que leurs combinaisons.

## Revendications

1. Elément de garniture (1) comprenant un ensemble de retenue (100) pour la retenue dudit élément de garniture (1) à un élément de carrosserie (2) d'un véhicule entre lesquels est destiné à être interposé un coussin (3) gonflable de sécurité, l'ensemble de retenue (100) comprenant :
- un porte-agrafe (4) venu intégralement de matière avec l'élément de garniture (1), comprenant :
• une partie proximale (5) liée à l'élément de garniture (1), et
• une partie distale (6) sur laquelle est montée une agrafe (8)
conformée pour une fixation à l'élément de carrosserie (2),
la partie proximale (5) et la partie distale (6) étant solidarisées par l'intermédiaire d'une région sécable (9) configurée pour se rompre lors du déploiement du coussin (3) gonflable de sécurité, et
la partie distale (6) étant déplaçable entre une position de repos dans laquelle la région sécable (9) solidarise la partie distale (6) et la partie proximale (5) et une position de déploiement dans laquelle la partie distale (6) est désolidarisée de la partie proximale (5) par rupture de la région sécable (9), et
- un élément de retenue (11) configuré pour retenir la partie distale (6) à l'élément de garniture (1) lorsque la partie distale (6) est en position de déploiement, **caractérisé en ce que** l'élément de retenue (11) est venu de matière avec l'élément de garniture (1).

2. Elément de garniture (1) selon la revendication 1, dans lequel la région sécable (9) comprend une zone de matériau ruptible configurée pour se rompre lors du déploiement du coussin (3) gonflable et pour désolidariser la partie distale (6) de la partie proximale (5).

3. Elément de garniture (1) selon l'une des revendications 1 ou 2, dans lequel la partie distale (6) comprend une paroi de montage (7) munie d'un orifice de montage (12), configurée pour coopérer avec un organe de montage complémentaire (13) prévu sur l'agrafe (8) pour le montage de l'agrafe (8) sur la partie distale (6).

4. Elément de garniture (1) selon la revendication 3, comprenant une portion de soutien (15) présentant globalement une forme de U, disposée en regard de l'organe de montage complémentaire (13) de l'agrafe (8) montée sur la paroi de montage (7), la portion de soutien (15) étant configurée pour soutenir l'organe de montage complémentaire (13) lors de la fixation de l'agrafe (8) à l'élément de carrosserie (2).

5. Elément de garniture (1) selon l'une des revendications 1 à 4, comprenant des ponts de matière (23) ruptibles entre l'élément de retenue (11) et la partie distale (6) en position de repos, ces ponts de matière (23) étant configurés pour se rompre lorsque la partie distale (6) est déplacée en position de déploiement.

6. Elément de garniture (1) selon l'une des revendications 1 à 5, dans lequel la partie distale (6) comprend un organe de butée (24) configuré pour venir en appui contre un organe de butée complémentaire (25) prévu sur l'élément de retenue (11) lorsque la partie distale (6) est en position de déploiement.

7. Elément de garniture (1) selon la revendication 4, dans lequel la partie distale (6) comprend deux parois latérales (14) se faisant face, rattachées à deux cotés périphériques opposés de la paroi de montage (7), et dans lequel la portion de soutien (15) est reliée aux deux parois latérales (14) par une portion de retour (16).

8. Elément de garniture (1) selon la revendication 7, dans lequel la partie distale (6) comprend une paroi inférieure (26) reliée à la paroi de montage (7) par les deux parois latérales (14), et dans lequel la partie proximale (5) comprend au moins un plot d'appui (28) disposé en regard de la paroi inférieure (26), l'au moins un plot d'appui (28) étant configuré pour permettre une prise d'appui de la paroi inférieure (26) lorsque l'agrafe (8) est fixée sur l'élément de carrosserie (2).

9. Elément de garniture (1) selon l'une des revendications 1 à 8, dans lequel la partie distale (6) comprend une paroi de fond (21) reliant le même coté des deux parois latérales (14), et l'ensemble de retenue (100) comprenant en outre une face de fond (29) s'étendant sensiblement parallèlement à la paroi de fond (21), la face de fond (29) comprenant une nervure de guidage (31) configurée pour guider le déplacement de la paroi de fond (21) de la partie distale (6) depuis sa position de repos vers sa position de déploiement.

10. Elément de garniture (1) selon l'une des revendications 1 à 4, 7 et 9, dans lequel l'élément de retenue (11) comprend un organe élastique (22) configuré pour prendre une position comprimée lorsque la partie distale (6) est en position de repos, et une position détendue, lorsque la partie distale (6) est en position de déploiement, dans laquelle la longueur de l'organe élastique (22) est plus importante que la longueur de l'organe élastique (22) en position comprimée.

11. Elément de garniture (1) selon l'une des revendications 1, 2 à 4, 7 et 9, dans lequel l'élément de retenue (11) comprend un cordon souple dont une première région d'extrémité du cordon est reliée à la partie distale (6) et une deuxième région d'extrémité est reliée à la partie proximale (5) du porte-agrafe (4), le cordon (17) étant configuré pour prendre une position détendue lorsque la partie distale (6) est en position de repos, dans laquelle le cordon est détendu, et une position tendue lorsque la partie distale (6) est en position de déploiement, dans laquelle le cordon est étendu.

12. Véhicule comprenant :
• un élément de carrosserie (2),
• un élément de garniture (1) selon l'une des revendications 1 à 11.

13. Véhicule selon la revendication 12 dans lequel l'élément de garniture (1) et le porte-agrafe (4) sont monoblocs et comprennent un matériau plastique tel que du polypropylène.

## Patentansprüche

1. Verkleidungsteil (1), umfassend eine Halteanordnung (100) zum Halten des Verkleidungsteils (1) an einem Karosserieteil (2) eines Fahrzeugs, zwischen denen ein Sicherheitsairbag (3) dazu bestimmt ist, eingesetzt zu werden, wobei die Halteanordnung (100) Folgendes umfasst:
- einen Klammerhalter (4), der integral aus einem Stück mit dem Verkleidungsteil (1) ausgebildet ist, Folgendes umfassend:
• ein proximales Teilstück (5), das mit dem Verkleidungsteil (1) verbunden ist, und
• ein distales Teilstück (6), auf dem eine Klammer (8) montiert ist, die für eine Befestigung an dem Karosserieteil (2) angepasst ist,
wobei das proximale Teilstück (5) und das distale Teilstück (6) durch eine teilbare Region (9) fest zusammengehalten werden, die konfiguriert ist, um beim Entfalten des Sicherheitsairbags (3) zu brechen, und
das distale Teilstück (6) zwischen einer Ruheposition, in der die teilbare Region (9) das distale Teilstück (6) und das proximale Teilstück (5) fest zusammenhält, und einer Entfaltungsposition verschiebbar ist, in der das distale Teilstück (6) durch Brechen der teilbaren Region (9) von dem proximalen Teilstück (5) getrennt wird, und
- ein Halteteil (11), das konfiguriert ist, um das distalen Teilstück (6) an dem Verkleidungsteil (1) zu halten, wenn das distale Teilstück (6) in Entfaltungsposition ist, **dadurch gekennzeichnet, dass** das Halteteil (11) aus einem Stück mit dem Verkleidungsteil (1) ausgebildet ist.

2. Verkleidungsteil (1) nach Anspruch 1, wobei die teilbare Region (9) eine Zone aus einem brechbaren Material umfasst, die konfiguriert ist, um beim Entfalten des Airbags (3) zu brechen und das distalen Teilstück (6) von dem proximalen Teilstück (5) zu trennen.

3. Verkleidungsteil (1) nach einem der Ansprüche 1 oder 2, wobei das distale Teilstück (6) eine Montagewand (7) umfasst, die mit einer Montageöffnung (12) versehen ist, konfiguriert, um mit einem ergänzenden Montageorgan (13) zusammenzuwirken, das auf der Klammer (8) für die Montage der Klammer (8) auf dem distalen Teilstück (6) vorgesehen ist.

4. Verkleidungsteil (1) nach Anspruch 3, umfassend einen Stützabschnitt (15), der im Allgemeinen eine U-Form aufweist, der gegenüber dem ergänzenden Montageorgan (13) der Klammer (8) angeordnet ist, die auf der Montagewand (7) montiert ist, wobei der Stützabschnitt (15) konfiguriert ist, um das ergänzende Montageorgan (13) bei der Befestigung der Klammer (8) an dem Karosserieteil (2) zu stützen.

5. Verkleidungsteil (1) nach einem der Ansprüche 1 bis 4, umfassend Materialbrücken (23), die zwischen dem Halteteil (11) und dem distalen Teilstück (6) in Ruheposition brechbar sind, wobei diese Materialbrücken (23) konfiguriert sind, um zu brechen, wenn das distale Teilstück (6) in Entfaltungsposition verschoben wird.

6. Verkleidungsteil (1) nach einem der Ansprüche 1 bis 5, wobei das distale Teilstück (6) ein Anschlagorgan (24) umfasst, das konfiguriert ist, um sich an ein ergänzendes Anschlagorgan (25) anzulegen, das auf dem Halteteil (11) vorgesehen ist, wenn das distale Teilstück (6) in Entfaltungsposition ist.

7. Verkleidungsteil (1) nach Anspruch 4, wobei das distale Teilstück (6) zwei Seitenwände (14) umfasst, die einander zugewandt sind, die an zwei entgegengesetzten peripheren Seiten der Montagewand (7) angebunden sind, und wobei der Stützabschnitt (15) durch einen Rückführungsabschnitt (16) mit den beiden Seitenwänden (14) verbunden ist.

8. Verkleidungsteil (1) nach Anspruch 7, wobei das distale Teilstück (6) eine untere Wand (26) umfasst, die durch die beiden Seitenwände (14) mit der Montagewand (7) verbunden ist, und wobei das proximale Teilstück (5) mindestens einen Anlegestift (28) umfasst, der gegenüber der unteren Wand (26) angeordnet ist, wobei der mindestens eine Anlegestift (28) konfiguriert ist, um ein Anlegen der unteren Wand (26) zu ermöglichen, wenn die Klammer (8) an dem Karosserieteil (2) befestigt ist.

9. Verkleidungsteil (1) nach einem der Ansprüche 1 bis 8, wobei das distale Teilstück (6) eine Bodenwand (21) umfasst, die dieselbe Seite der beiden Seitenwände (14) verbindet, und die Halteanordnung (100) weiter eine Bodenfläche (29) umfasst, die sich im Wesentlichen parallel zu der Bodenwand (21) erstreckt, wobei die Bodenfläche (29) eine Führungsrippe (31) umfasst, die konfiguriert ist, um die Verschiebung der Bodenwand (21) des distalen Teilstücks (6) aus ihrer Ruheposition in ihre Entfaltungsposition zu führen.

10. Verkleidungsteil (1) nach einem der Ansprüche 1 bis 4, 7 und 9, wobei das Halteteil (11) ein elastisches Organ (22) umfasst, das konfiguriert ist, um eine komprimierte Position einzunehmen, wenn das distale Teilstück (6) in Ruheposition ist, und eine entspannte Position, wenn das distale Teilstück (6) in Entfaltungsposition ist, in der die Länge des elastischen Organs (22) größer ist als die Länge des elastischen Organs (22) in komprimierter Position.

11. Verkleidungsteil (1) nach einem der Ansprüche 1, 2 bis 4, 7 und 9, wobei das Halteteil (11) ein flexibles Band umfasst, von dem eine erste Endregion des Bandes mit dem distalen Teilstück (6) verbunden ist, und eine zweite Endregion mit dem proximalen Teilstück (5) des Klammerhalters (4) verbunden ist, wobei das Band (17) konfiguriert ist, um eine entspannte Position einzunehmen, wenn das distale Teilstück (6) in Ruheposition ist, in der das Band entspannt ist, und eine gespannte Position, wenn das distale Teilstück (6) in Entfaltungsposition ist, in der das Band erstreckt ist.

12. Fahrzeug, umfassend:
• ein Karosserieteil (2),
• ein Verkleidungsteil (1) nach einem der Ansprüche 1 bis 11.

13. Fahrzeug nach Anspruch 12, wobei das Verkleidungsteil (1) und der Klammerhalter (4) Monoblock sind, und ein Kunststoffmaterial, wie Polypropylen, umfassen.

## Claims

1. A retaining assembly (100) for retaining a trim element (1) to a bodywork element (2) of a vehicle between which an airbag (3) is intended to be interposed, the assembly comprising:
- a clip-holder (4) made integrally in one piece with the trim element (1), comprising:
• a proximal portion (5) connected to the trim element (1), and
• a distal portion (6) on which is mounted a clip (8) shaped for fastening to the bodywork element (2),
the proximal portion (5) and the distal portion (6) being secured via a frangible region (9) configured to break up upon deployment of the airbag (3), and
the distal portion (6) being displaceable between a rest position in which the frangible region (9) secures the distal portion (6) and the proximal portion (5) and a deployment position in which the distal portion (6) is disengaged from the proximal portion (5) by breakage of the frangible region (9), and
- a retaining element (11) configured to retain the distal portion (6) to the trim element (1) when the distal portion (6) is in the deployment position, **characterized in that** the retaining element (11) is made in one piece with the trim element (1).

2. The retaining assembly (100) according to claim 1, wherein the frangible region (9) comprises a breakable material area configured to break up upon deployment of the airbag (3) and to disengage the distal portion (6) from the proximal portion (5).

3. The retaining assembly (100) according to claim 1 or 2, wherein the distal portion (6) comprises a mounting wall (7) provided with a mounting orifice (12), configured to cooperate with a complementary mounting member (13) provided on the clip (8) for mounting the clip (8) on the distal portion (6).

4. The retaining assembly (100) according to claim 3, comprising a support portion (15) generally having a U-shape, disposed opposite the complementary mounting member (13) of the clip (8) mounted on the mounting wall (7), the support portion (15) being configured to support the complementary mounting member (13) upon fastening of the clip (8) to the bodywork element (2).

5. The retaining assembly (100) according to any of claims 1 to 4, comprising breakable material bridges (23) between the retaining element (11) and the distal portion (6) in the rest position, these material bridges (23) being configured to break up when the distal portion (6) is displaced in the deployment position.

6. The retaining assembly (100) according to any of claims 1 to 5, wherein the distal portion (6) comprises a stop member (24) configured to bear against a complementary stop member (25) provided on the retaining element (11) when the distal portion (6) is in the deployment position.

7. The retaining assembly (100) according to claim 4, wherein the distal portion (6) comprises two side walls (14) facing each other, attached to two opposite peripheral sides of the mounting wall (7), and wherein the support portion (15) is connected to the two side walls (14) by a return portion (16).

8. The retaining assembly (100) according to claim 7, wherein the distal portion (6) comprises a lower wall (26) connected to the mounting wall (7) by the two side walls (14), and wherein the proximal portion (5) comprises at least one bearing stud (28) disposed opposite the lower wall (26), the at least one bearing stud (28) being configured to allow enable a bearing of the lower wall (26) when the clip (8) is fastened to the bodywork element (2).

9. The retaining assembly (100) according to any of claims 1 to 8, wherein the distal portion (6) comprises a bottom wall (21) connecting the same side of the two side walls (14), and the retaining assembly (100) further comprising a bottom face (29) extending substantially parallel to the bottom wall (21), the bottom face (29) comprising a guide rib (31) configured to guide the displacement of the bottom wall (21) of the distal portion (6) from its rest position to its deployment position.

10. The retaining assembly (100) according to any of claims 1 to 4, 7 and 9, wherein the retaining element (11) comprises an elastic member (22) configured to take on a compressed position when the distal portion (6) is in the rest position, and a loose position, when the distal portion (6) is in the deployment position, in which the length of the elastic member (22) is greater than the length of the elastic member (22) in the compressed position.

11. The retaining assembly (100) according to any of claims 1, 2 to 4, 7 and 9, wherein the retaining element (11) comprises a flexible cord (17) where a first end region of the cord (17) is connected to the distal portion (6) and a second end region is connected to the proximal portion (5) of the clip-holder (4), the cord (17) being configured to take on a loose position when the distal portion (6) is in the rest position, in which the cord (7) is loosened, and a stretched position when the distal portion (6) is in the deployment position, in which the cord is (17) extended.

12. A vehicle comprising:
• a bodywork element (2),
• a trim element (1), and
• a retaining assembly (100) according to any of claims 1 to 11.

13. The vehicle according to claim 12, wherein the trim element (1) and the clip-holder (4) are integral and comprise a plastic material such as polypropylene.
